# EUROPEAN PATENT SPECIFICATION

(11) **EP 1 725 056 B1**
(45) Date of publication and mention of the grant of the patent: **09.01.2013**
(21) Application number: 05104060.8
(22) Date of filing: 16.05.2005
(51) Int. Cl.: H04W 88/02

(54) **Method for disabling a mobile device**
Verfahren zur Sperrung eines mobilen Gerätes
Procédé pour la désactivation d'un terminal mobile

(43) Date of publication of application: 22.11.2006
(73) Proprietor: Sony Ericsson Mobile Communications AB, 221 88 Lund (SE)
(72) Inventor: Gajdos, Tom, 240 10 Dalby (SE); Kretz, Martin, 223 52 Lund (SE)
(74) Representative: Schwarz, Markku

(56) References cited:
- EP-A- 0 720 400
- US-A1- 2003 065 934

## Description

### Technical Field of the Invention

The present invention relates to a method for remotely disabling at least one functionality of a mobile device. The invention also relates to a mobile device having communication capabilities and comprising at least one functionality, which may be disabled from a remote location.

### Description of Related Art

Various types of mobile devices having communication capabilities, which may communicate with a communication network, are known, such as a portable mobile radio communication equipment, a mobile radio terminal, a mobile telephone, a pager, a communicator, an electronic organizer, and a smartphone. The communication network may e.g. be a mobile communication network, such as a GSM (Global System for Mobile communication) network, or a WCDMA (Wideband Code Division Multiple Access) network as specified e.g. by 3GPP (3^{rd} Generation Partnership Project).

If a mobile device is stolen when it is switched on, the thief may use the mobile device provided that it is not locked by a security code. Not only is it a source of irritation that the mobile device is stolen, unauthorized use of the mobile device may also result in expensive invoices from the network operator. Also, information stored in the mobile device may be used unauthorized.

To prevent or limit unauthorized use of a stolen mobile device, it is known to remotely disable or lock it.

GB-A-2 380 356 discloses remote disabling or locking of a mobile communication apparatus having a subscriber identity module (SIM). A locking message is formed by a control center, which when received by the mobile telephone instructs it to disable or lock by simulating a switch off/on action, preventing further use of the SIM. Furthermore, a flag within a memory of the SIM is set. When the flag is set, access to functionality of the mobile telephone is prevented. It is a disadvantage with this solution that the mobile telephone may still be used if the disabled SIM is replaced by another SIM. Also, functionality provided without involvement of the SIM and content stored in a memory external to the SIM may be accessible even if the SIM is made useless. Thus, the mobile telephone is still of value to the thief. Furthermore, no acknowledgement of disabling of the mobile telephone may be provided to the control center.

Another example can be found in document US 2003/065934, Angelo Michael, 3 April 2003.

### Summary of the Invention

It is an object of the invention to provide a method for improving the security of a mobile device having communication capabilities. It is also an object of the invention to improve the security of a mobile device having communication capabilities.

According to a first aspect, a method for disabling at least one functionality of a mobile device having communication capabilities and program instructions for said functionality, comprises receiving a message from a remote communication device by means of the mobile device. The message includes disabling data for disabling the at least one functionality. The method also comprises altering at least a portion of the program instructions for the at least one functionality based on the disabling data and thereby disabling the functionality. The disabling data includes data for altering the program instructions for the at least one functionality.

The method may also comprise receiving the message according to a protocol for updating program instructions.

The disabling data may be associated with at least a portion of the program instructions for the at least one functionality. Also, the method may comprise updating the portion with the disabling data.

The disabling data may comprise delete instructions for deleting at least a portion of the program instructions. The method may comprise deleting the portion in response to executing the delete instructions.

The disabling data may include program instructions for a functionality. The step of altering may comprise replacing at least a portion of the program instructions with the program instructions included in the disabling data.

The program instructions of the disabling data may be instructions for a tracking functionality. The method may comprise generating a geographical position of the mobile device and transmitting the geographical position to a remote device in response to running the program instructions for the tracking functionality.

The disabling data may comprise an identity tag. The method may comprise storing the identity tag in a memory. The identity tag may be read in response to an attempt to restore a previously disabled functionality.

According to a second aspect, a mobile device comprises a memory having program instructions for at least one functionality, a receiver for receiving a message from a remote communication device, and an updating unit for updating at least a portion of the program instructions based on the disabling data and thereby disabling said functionality. The message comprises disabling data for disabling the at least one functionality. The disabling data comprises data for altering the program instructions.

The receiver may comprise means for receiving, during operation, the message according to a protocol for updating program instructions.

The disabling data may be associated with at least a portion of the program instructions for the at least one functionality.

The disabling data may include instructions to delete at least a portion of the stored program instructions. Alternatively or additionally, the disabling data may include program instructions for a functionality. If so, the updating unit may be configured to replace at least a portion of the program instructions for the at least one functionality with the program instructions of the disabling data.

The program instructions of the disabling data may be program instructions for a tracking functionality. The mobile device may comprise a position determination unit for determining the geographical position of the mobile device.

The disabling data may include an identity tag. If so, the mobile device may comprise a processor for reading the identity tag in response to an attempt to restore a disabled functionality.

The mobile device may be a portable mobile radio communication equipment, a mobile radio terminal, a mobile telephone, a pager, a communicator, an electronic organizer, a smartphone, a vehicle, a rail vehicle, an aircraft or a boat.

According to third aspect, a method for remotely disabling at least one functionality of a mobile device having communication capabilities and program instructions for said functionality, comprises generating a message comprising disabling data for disabling at least one functionality of the mobile device; and transmitting the message to the mobile device from a control center. The disabling data comprises data for disabling at least a portion of the program instructions.

The method for remotely disabling at least one functionality may comprise transmitting the message according to a protocol for updating program instructions.

The method for remotely disabling at least one functionality may comprise incorporating disabling data including program instructions for deleting at least a portion of the program instructions into the message. Also, said method may comprise incorporating the disabling data including data for replacing at least a portion of the program instructions for said at least one functionality into the message.

The disabling data may include program instructions to replace at least a portion of the program instructions for said at least one functionality. Alternatively or additionally, the disabling data may include program instructions for a tracking functionality.

According to a fourth aspect, a control device for remotely disabling at least one functionality of a mobile device having communication capabilities and program instructions for said functionality, comprises a controller for generating a message including disabling data for disabling at least one functionality of the mobile device; and a communication unit for transmitting the message to the mobile device. The disabling data includes data for disabling at least a portion of the program instructions; and the controller comprises means for, during operation, incorporating the disabling data into the message.

The communication unit may be configured to transmit the message according to a protocol for updating program instructions.

The disabling data may include program instructions for deleting at least a portion of the program instructions for said at least one functionality.

The disabling data may include data for replacing at least a portion of the program instructions for the at least one functionality.

The disabling data may include program instructions to replace at least a portion of the program instructions for said at least one functionality. The disabling data may include program instructions for a tracking functionality.

According to a fifth aspect, a computer program product comprises computer program code means for executing the method for disabling at least one functionality of a mobile device, when the computer program code means are run by an electronic device having computer capabilities.

According to a sixth aspect, a computer program product comprises computer program code means for executing the method for remotely disabling at least one functionality, when said computer program code means are run by an electronic device having computer capabilities.

Further embodiments of the invention are defined in the dependent claims.

It is an advantage of the invention that at least one functionality of the mobile device having communication capabilities may be remotely disabled. Thus, unauthorized use of the mobile device may be prohibited.

It should be emphasized that the term "comprises/comprising" when used in this specification is taken to specify the presence of stated features, integers, steps or components but does not preclude the presence or addition of one or more other features, integers, steps, components or groups thereof.

### Brief Description of the Drawings

Further objects, features, and advantages of the invention will appear from the following description of several embodiments of the invention, wherein various aspects of the invention will be described in more detail with reference to the accompanying drawings, in which:
Fig. 1 is a schematic view of a mobile device connected to a control center via a communication network;
Fig. 2 is a block diagram of components of the mobile device in Fig. 1;
Fig. 3 is a block diagram of components of the control center of Fig. 1; and
Fig. 4 is a flow-chart of one embodiment of the method according to the invention.

### Detailed Description of Embodiments

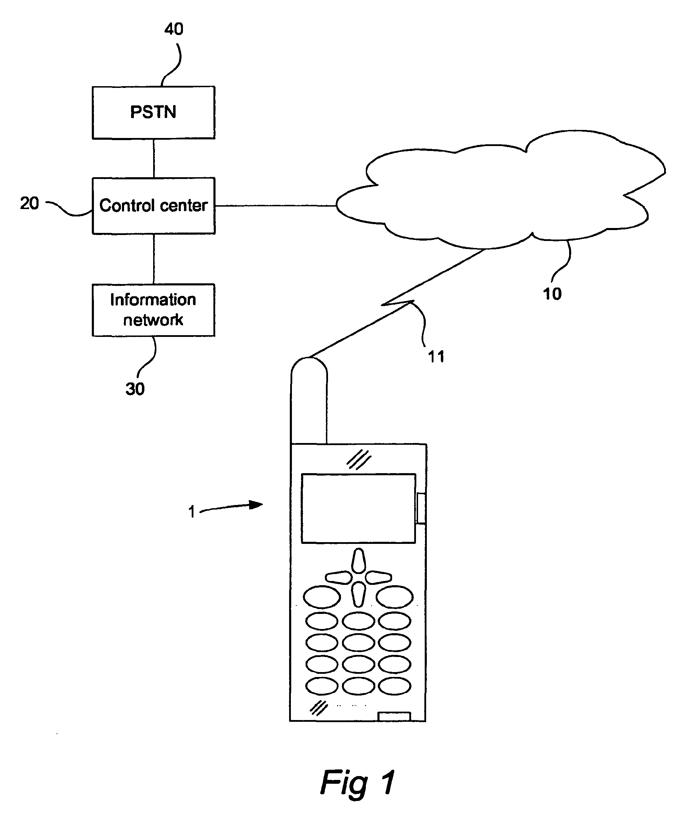

Fig. 1 illustrates a mobile device 1 having communication capabilities, such as speech, data, and message communication capabilities, which may be connected to a communication network 10 over a wireless link 11. The communication network 10 is connected to a control center 20, from which a message, which is relayed by the communication network 10, may be transmitted to the mobile device 1. If the mobile device 1 has been stolen, a message comprising disabling data for altering stored program instructions for at least one functionality of the mobile device 1 may be transmitted from the control center 20 to the mobile device 1 for remotely disabling at least one of its functionalities. The control center 20 may be connected to a global information network 30, such as the Internet, and/or a PSTN (Public Switched Telephone Network) 40, such that reporting of the mobile device 1 being stolen may be provided by means of a computer connected to the Internet 30 and/or by means of a telephone connected to the PSTN 40. Reporting of the mobile device 1 being stolen may also be made by means of a wireless communication device, such as a mobile telephone, being connected to the communication network 10.

The mobile device 1 may be a portable mobile radio communication equipment, a mobile radio terminal, a mobile telephone, a pager, a communicator, an electronic organizer, and a smartphone. The mobile device may also be a vehicle, a rail vehicle, an aircraft or a boat, which has communication capabilities, e.g. built-in radio communication equipment. In Fig. 1, the mobile device is exemplified as a mobile telephone.

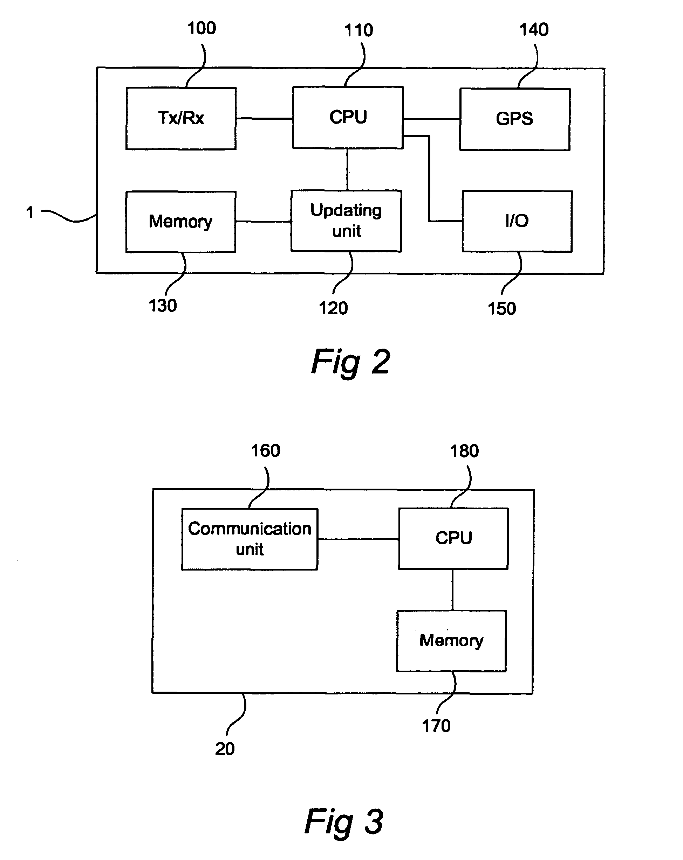

Fig. 2 illustrates some components of the mobile device 1. The mobile device 1 comprises a receiver/transmitter unit 100, a processor 110, such as a CPU (Central Processing unit), an updating unit 120, a memory 130, a position determination unit 140 and an input/output interface 150.

The receiver/transmitter unit 100 may be a radio receiver/transmitter, which utilizes a TDMA (Time Division Multiple Access) access technique e.g. according to the GSM (Global System for Mobile communication) standard, a CDMA (Code Division Multiple Access), or a WCDMA (Wideband CDMA), such as according to the 3GPP (3^{rd} Generation Partnership Project) standard.

The mobile device 1 may comprise various types of memories, such as a RAM (Random Access Memory), and a nonvolatile memory, such as a ROM (Read Only Memory) or a SIM (Subscriber Identity Module), shown collectively by memory 130. The program data, such as firmware software, relating to the functionality of the mobile device may be stored in the ROM and/or the SIM.

The updating unit 120 may be implemented by means of a separate hardware component, such as a processor, an ASIC (Application Specific Integrated Circuit) or an FPGA (Field programmable Gate Array). Alternatively, the updating unit 120 is implemented as a software component, i.e. software program code means, which may be run by processor 110 or a separate processor. The program code means may e.g. be stored in memory 130. The updating unit 120 may also be implemented as a combination of a software and hardware component.

The position determination unit 140 may comprise a GPS (Global Positioning System) unit for determining the geographical position of the mobile device 1. Alternatively, the position determination unit 140 is adapted to obtain the geographical position based on data received from the communication network 10, such as time of arrival, angle of arrival and/or time difference of arrival for signals received from one or several base stations. Some networks also provide network assisted GPS, to which the position determination unit 140 may be configured.

The input/output interface 150 comprises connecting means for connecting the mobile device to an external electronic device, such as a computer. The connecting means may e.g. be an accessory connector, through which the mobile device 1 may be connected to the external electronic device by means of a cable. Alternatively, the connecting means comprises means for a wireless connection, such as an infrared transmitter/receiver, or a short link radio transmitter/receiver, such as a Bluetooth® radio.

A message transmitted by the control center 20 is received by means of the receiver/transmitter unit 100, and processed by means of the processor 110. If the message is an updating message for altering at least a portion of program instructions for a functionality of the mobile device 1 the processor 110 will forward the message, or the disabling data thereof, to the updating unit 120.

The updating unit 120 is configured to process the disabling. The disabling data is received in a message from the control center 20. A functionality of the mobile device 1 may be provided by program instructions or code means stored in the memory 130 and being executable by one or several processors. The functionality of the mobile device 1 may e.g. be a call setup functionality for establishing a call to another telephone, a messaging functionality for transmitting a data message, a data communication, a phone book, or a camera functionality.

In another embodiment, the functionality is a functionality of a vehicle, such as an electronic fuel injection system, an ignition system, or a drive by wire system, such as an electronic steering or an electronic accelerator pedal of the car.

The functionality of the mobile device 1 may be any kind of functionality, which is supported or implemented by program instructions to function properly.

According to one embodiment, at least one functionality of the mobile device is disabled if the updating unit 120 alters data bits of at least a portion of program instructions for the at least one functionality based on the disabling data.

The updating unit 120 may alter certain portions of the program instructions relating to the functionality with data bits of the disabling data, which e.g. may be a set of only zeros or only ones, or a combination thereof that does not provide anything useful, thereby disabling the functionality. Alternatively, the disabling data comprises program instructions for instruction the updating unit 120 to delete certain portions of the stored data bits of the program instructions relating to the functionality, thereby disabling it. Disabling the mobile device 1 has the advantage that an unauthorized user has no or at least limited use of the mobile device 1. Also, if all functionalities, which may incur costs to the owner of the mobile device 1, are disabled said costs may be avoided.

It is an advantage of the above described and other embodiments that the disabled functionalities are disabled independently of the SIM. Thus, replacing the SIM has no effect on the disabled functionality.

According to another embodiment, the disabling data comprises program instructions or software program code means for a functionality that is new for the mobile device 1. In this embodiment, the updating unit 120 replaces at least a portion of stored program instructions for at least one functionality with program instructions of the disabling data. When the stored program instructions are replaced, the functionality associated with them is disabled. The disabling data may e.g. comprise program instructions for a tracking functionality. The processor 110 may carry out the tracking functionality by running the program instructions relating thereto. Adding a functionality has the advantage that not only is a functionality disabled, another functionality is added, which may aid in getting the stolen mobile device 1 back.

The stored program instructions relating to all functionalities of the mobile device, or a subset thereof, such as all communication functionalities, may at least partially be altered based on the disabling data, whereby all or a subset of the functionalities are disabled. Furthermore, data, such as program data, stored in the memory 130 and being related to the disabled functionality may be deleted, wherein the data may not be patched so as to enable the disabled functionality.

If it is desired that an unauthorized user should not notice the disabling of a functionality, a functionality that probably not will be used by the unauthorized user may de disabled. For example, it may be more likely that a functionality that has not been used during a predetermined time interval will not be used in the near future. Then, such a functionality may be chosen to be disabled. The functionality to be disabled may be chosen by the updating unit 120, or set by data received in an initiation message or the message comprising the disabling data.

In one embodiment, the tracking functionality is initialized in response to use of another functionality, such as a communication functionality. Alternatively, the tracking functionality may be initialized once it is stored, or be run as a background functionality, which is not notified to the unauthorized user. This has the advantage that the mobile device 1 may be tracked without the knowledge of the unauthorized user.

The tracking functionality may comprise sending the geographical position of the mobile device 1 to the control center 20. Thus, the processor 110 may request that the position determination unit 140 should determine the geographical position of the portable communication 1, which is transmitted by means of the transmitter/receiver unit 100, e.g. in an SMS (Short Message Service) message, to the control center or another remote device. The address or number, to which the message with the geographical position should be sent, may be specified in a initiation message or the message comprising the disabling data.

In one embodiment, the geographical position is periodically generated and transmitted. The geographical position may e.g. be generated and transmitted once every 5 minutes. The geographical position may e.g. be generated by means of a GPS (Global Positioning System) unit. Alternatively, the geographical position is generated based on mobile assisted positioning, wherein any mobile centric positioning method, e.g. E-OTD (Enhanced Observed Time difference) or GPS, in which the mobile device 1 provides position measurements to the communication network 20 for computation of a location estimate by the communication network 10 or the control center 20. The communication network 10 or the control center 20 may alternatively or additionally provide assistance data to the mobile device 1 to enable position measurements. In one embodiment, the tracking functionality comprises rendering a signal in response to a request from the service center 20, or from another authorized control device. The signal may be of a certain type, such as an SMS, which is dedicated for stolen equipment. This is an advantage if the mobile device 1 has been tracked to a certain geographical area in which several persons or devices are located, whereby the mobile device 1 may be recognized if activation of the signal is requested. If the stolen equipment is a car, the horn may be activated in response to a signal activation request.

In another embodiment, the tracking functionality comprises enabling or switching on a camera, such as a photo or video camera of the mobile device 1. If a photo camera is switched on, photos may be generated and transmitted with predetermined intervals, such as every minute, every 5 minutes, etc. If a video camera is switched on, a streaming service may be initiated, wherein the recorded video is continuously transmitted to the control center 20 or another communication device. Additionally or alternatively, the tracking functionality may switch on the microphone of the mobile device 1, wherein audio data may be recorded and transmitted to the service center 20, e.g. by streaming or intermittently.

It is also possible to enable a functionality, such as the tracking functionality, without disabling any other functionality.

In one embodiment, the message comprising disabling data is received according to a protocol for updating or upgrading program instructions, e.g. firmware, of the mobile device 1. One such protocol is OMA (Open Mobile Alliance) SyncML Device Management. Using this protocol has the advantage that no special implementation for disabling the functionality is needed except from the firmware upgrade functionality itself. Also, this protocol provides two-way communication and authentication. The firmware upgrade functionality is often added to a mobile device 1, wherein adding the disabling function does not incur any additional cost.

In one embodiment, the message sent from the control center 20 comprises authentication data, such as a public key, with which the data of the message is encrypted. The public key of the control center 20 may be stored in the memory 130, e.g. when the mobile device 1 is manufactured. The message may comprise an identification tag indicating that it is a message for disabling a functionality of the mobile device. When the mobile device 1 receives the message it may verify that the message comprises disabling data. Also, the message comprises one or several certificates. Thus, the mobile device 1 may verify that it is authorized to connect to a certain server, which is authorized to disable a certain functionality and/or that the message is received from a remote device that is authorized to disable at least one functionality. In another embodiment, the authentication data of the message is a code. One or several codes for one or several control centers that are authorized to disable at least one functionality may be stored in the memory 130, e.g. during manufacturing or by remote updating of the memory 130.

In one embodiment, the disabling data may be verified with one or several certificates, such as directly after downloading the updating data and/or prior to and in connection with using the updating data.

One or several initialization messages may be transmitted from the control center 20 to the mobile device 1 before the message comprising the disabling data is transmitted.Any of the initialization messages may comprise the authentication data rather than the message comprising the disabling data. Consequently, the authentication data and the disabling data need not be transmitted in the same message.

In one embodiment, an acknowledge message for confirming disabling of the at least one functionality may be transmitted to a remote device, such as the control center 20, another mobile telephone, or a host computer of an e-mail box, in response to disabling at least one functionality.

The disabling data may comprise an identity tag, such as a name or number, e.g. IMEI (International Mobile Equipment Identifier) or IMSI (International Mobile Station Identity) of the mobile device 1 to disable, which may be written to and stored in memory 130.

If the mobile device 1 is returned to its owner, the disabled functionality may be restored. A computer may be connected to the input/output interface 150. Program instructions for the disabled functionality may be transferred from the computer to the memory 130. However, to prevent unauthorized enabling of the disabled functionality, the processor 110 may read the identity tag in response to the attempt to enable the functionality. The computer can prove that it is authorized e.g. if it has the identity tag, or an access code, associated with the disabling data. When the mobile device 1 has authorized the computer it can start updating the program instructions for the disabled functionality. The computer may e.g. be provided at a service point.

In an alternative embodiment, the disabled functionality may be restored by transmitting enabling data from the control center 20 to the mobile device 1. This may be done in the same manner as transmitting the disabling data as described above, albeit with enabling data rather than disabling data. The enabling data comprises data for restoring the disabled functionality and may be accompanied by an identity tag, such as the IMEI or IMSI, wherein unauthorized enabling is prevented.

Fig. 3 illustrates certain components of the control center 20. The control center may e.g. be provided by a server computer. The control center 20 comprises a communication unit 160, a memory 170 and a controller 180.

The communication unit 160 comprises communication means for communication with the mobile device 1, such as a cable and/or a radio receiver/transmitter for establishing a connection to the communication network 10. Memory 170 may comprise a RAM and/or a ROM memory. The controller 180 may be a CPU and be configured to generate the message comprising the disabling data to be sent to the mobile device 1. The disabling data may be generated based on device information received from the mobile device 1. The disabling data may at least partly be stored in memory 170.

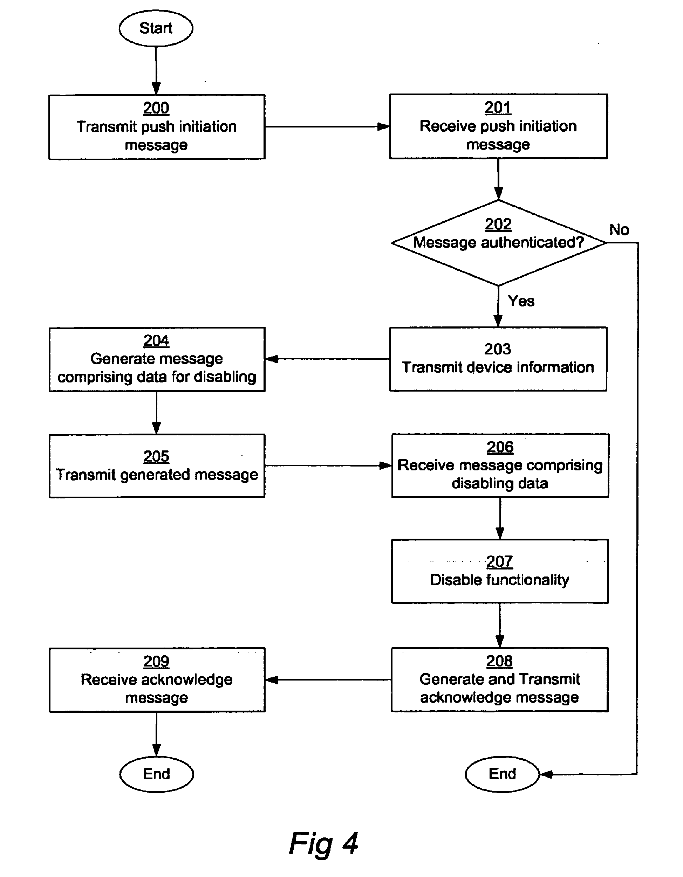

Fig. 4 illustrates one method according to the invention, which may be implemented using the OMA (Open Mobile Alliance) SyncML Device Management protocol. Disabling of at least one functionality of the mobile device 1 may be initiated by reporting it as stolen to the control center 20. To prevent unauthorized reporting, the person reporting may be required to give a security code, such as a user name and/or password to the control center 20. The reporting may be done either via the global information network 30, via the PSTN 40, or via the communication network 10.

In Fig. 4, steps carried out in the control center 20 are shown to the left whereas steps carried out in the mobile device 1 are shown to the right. In step 200, a push initiation message is transmitted from the control center 20 to the mobile device 1 to set up a connection between them.

In step 201, the mobile device 1 receives the push initiation message. In step 202, the mobile device 1 authenticates the push initiation message to verify whether the control center 20 is authorized to disable any of its functionality. If the answer in step 202 is no, the procedure is ended, e.g. by not responding to the push initiation message. If the answer in step 201 is yes, the procedure proceeds to step 203, wherein device information is transmitted to the control center 20. The device information may comprise information of the manufacturer of the mobile device, type, serial number, capabilities, and/or type or version of firmware etc. Together with the device information may also client credentials be transmitted. The device information and the client credentials may be transmitted in a packet set up according to the SyncML DM protocol. The device information may any information according to the SyncML DM specification.

The device information is received by the control center 20 in step 204, which in response thereto generates a message comprising data for disabling at least one functionality of the mobile device 1. The disabling data may be generated in dependence of the device information received. For example, depending on the type or version of the firmware, the disabling message could specify that certain portions of program instructions of a particular firmware should be deleted, or replaced by only zeros or ones. Then, in step 205 the message comprising the disabling data is transmitted to the mobile device 1.

In step 206, the mobile device 1 receives the message comprising the disabling data. In response to receiving the disabling data, the updating unit 120 alters at least a portion of program instructions for at least one functionality of the mobile device 1, such as described above, whereby said functionality is disabled. When the functionality has been disabled, the mobile device 1 generates and transmits an acknowledge message to the control center 20 in step 208. However, if all communication functionalities of the mobile device 1 are disabled, no acknowledge message can be transmitted.

The acknowledge message is received by the control center in step 209, wherein the procedure is ended.

All steps carried out in the method according to Fig. 4 need not be carried out in all embodiments. For example, the disabling data may be included in the push initiation message, wherein the device information need not be transmitted. The message comprising the disabling data may comprise authentication data rather than the push initiation message. Also, the acknowledge message need not be transmitted in all embodiments.

The present invention has been described above with reference to specific embodiments. However, other embodiments than the above described are possible within the scope of the invention. Different method steps than those described above, performing the method by hardware or software, may be provided within the scope of the invention. The different features and steps of the invention may be combined in other combinations than those described. The scope of the invention is only limited by the appended patent claims.

## Claims

1. A method for disabling at least one functionality of a mobile device (1) having communication capabilities and program instructions for said functionality, comprising:
receiving a message from a remote communication device (20) by means of the mobile device (1), said message including disabling data for disabling said at least one functionality;
**characterized by**
altering at least a portion of said program instructions for said at least one functionality based on said disabling data and thereby disabling said functionality, whereby the disabling data includes data for altering said program instructions for said at least one functionality and a restoring authorisation identity tag.

2. The method according to claim 1, comprising receiving the message according to a protocol for updating program instructions.

3. The method according to claim 1 or 2, wherein the disabling data is associated with at least a portion of the program instructions for said at least one functionality, the method comprising updating said portion with said disabling data.

4. The method according to claim 1 or 2, wherein the disabling data comprises delete instructions for deleting at least a portion of the program instructions, the method comprising deleting said portion in response to executing said delete instructions.

5. The method according to claim 1 or 2, wherein the disabling data includes program instructions for a functionality, and the step of altering comprises replacing at least a portion of said program instructions with the program instructions included in the disabling data.

6. The method according to claim 5, wherein the program instructions of the disabling data are instructions for a tracking functionality, and the method comprises generating a geographical position of the mobile device (1) and transmitting said geographical position to a remote device in response to running said program instructions for said tracking functionality.

7. The method according to any of the previous claims, wherein the disabling data comprises a restoring authorisation identity tag, the method comprising storing the restoring authorisation identity tag in a memory (130).

8. The method according to claim 7, comprising reading the restoring authorisation identity tag in response to an attempt to restore a previously disabled functionality.

9. A mobile device (1) comprising,
a memory (130) having program instructions for at least one functionality,
a receiver (100) for receiving a message from a remote communication device (20), the message comprising disabling data for disabling said at least one functionality;
**characterized by**
an updating unit (120) for updating at least a portion of the program instructions based on the disabling data and thereby disabling said functionality, whereby the disabling data comprises data for altering the program instructions and a restoring authorisation identity tag.

10. The mobile device according to claim 9, wherein the receiver comprises means for receiving, during operation, the message according to a protocol for updating program instructions.

11. The mobile device according to claim 9 or 10,
wherein the disabling data is associated with at least a portion of the program instructions for said at least one functionality.

12. The mobile device according to claim 9 or 10,
wherein the disabling data includes instructions to delete at least a portion of the stored program instructions.

13. The mobile device according to claim 9 or 10, wherein the disabling data includes program instructions for a functionality, and the updating unit (120) is configured to replace at least a portion of the program instructions for said at least one functionality with the program instructions of the disabling data.

14. The mobile device according to claim 13, wherein the program instructions of the disabling data are program instructions for a tracking functionality, and the mobile device comprises a position determination unit (140) for determining the geographical position of the mobile device (1).

15. The mobile device according to any of claims 9 to 14, wherein the disabling data includes a restoring authorisation identity tag.

16. The mobile device according to any of claims 9 to 15, comprising a processor (110) for reading the restoring authorisation identity tag in response to an attempt to restore a disabled functionality.

17. The mobile device according to any of claims 9 to 15, wherein the mobile device is a portable mobile radio communication equipment, a mobile radio terminal, a mobile telephone (1), a pager, a communicator, an electronic organizer, a smartphone; or a vehicle, a rail vehicle, an aircraft or a boat having communication capabilities.

18. A method for remotely disabling at least one functionality of a mobile device (1) having communication capabilities and program instructions for said functionality, comprising
generating a message comprising disabling data for disabling at least one functionality of the mobile device (1) ;
**characterized by**
transmitting the message to the mobile device from a control center (20), whereby the disabling data comprises data for disabling at least a portion of the program instructions and a restoring authorisation identity tag.

19. The method according to claim 18, comprising transmitting the message according to a protocol for updating program instructions.

20. The method according to claim 18 or 19, comprising incorporating disabling data including program instructions for deleting at least a portion of the program instructions into the message.

21. The method according to claim 18 or 19, comprising incorporating disabling data including data for replacing at least a portion of the program instructions for said at least one functionality into the message.

22. The method according to claim 18 or 19, wherein the disabling data includes program instructions to replace at least a portion of the program instructions for said at least one functionality.

23. The method according to claim 22, wherein the disabling data includes program instructions for a tracking functionality.

24. A control device (20) for remotely disabling at least one functionality of a mobile device (1) having communication capabilities and program instructions for said functionality, comprising
a controller (180) for generating a message including disabling data for disabling at least one functionality of the mobile device (1); and
**characterized by**
a communication unit (160) for transmitting the message to the mobile device (1), whereby
the disabling data includes data for disabling at least a portion of the program instructions and a restoring authorisation identity tag; and
the controller (180) comprises means for, during operation, incorporating the disabling data into the message.

25. The control device according to claim 24, wherein the communication unit (160) is configured to transmit the message according to a protocol for updating program instructions.

26. The control device according to claim 24 or 25,
wherein the disabling data includes program instructions for deleting at least a portion of the program instructions for said at least one functionality.

27. The control device according to claim 24 or 25,
wherein the disabling data includes data for replacing at least a portion of the program instructions for said at least one functionality.

28. The control device according to claim 24 or 25,
wherein the disabling data includes program instructions to replace at least a portion of the program instructions for said at least one functionality.

29. The control device according to claim 28, wherein the disabling data includes program instructions for a tracking functionality.

30. A computer program product comprising computer program code means for executing the method according to any of claims 1 to 8, when said computer program code means are run by an electronic device having computer capabilities.

31. A computer program product comprising computer program code means for executing the method according to any of claims 18 to 23, when said computer program code means are run by an electronic device having computer capabilities.

## Patentansprüche

1. Verfahren zum Deaktivieren mindestens einer Funktionalität eines Mobilgeräts (1), welches Kommunikationsfähigkeiten und Programmanweisungen für die Funktionalität besitzt, umfassend:
Empfangen einer Mitteilung von einer entfernten Kommunikationsvorrichtung (20) mithilfe des Mobilgeräts (1), wobei die Mitteilung Deaktivierungsdaten zum Deaktivieren der mindestens einen Funktionalität aufweist,
**gekennzeichnet durch**
Verändern mindestens eines Abschnitts der Programmanweisungen für die mindestens eine Funktionalität auf Grundlage der Deaktivierungsdaten und **dadurch** Deaktivieren der Funktionalität, wobei die Deaktivierungsdaten Daten zum Verändern der Programmanweisungen für die mindestens eine Funktionalität und eine Wiederherstellungsauthorisierung-Identitätsmarke aufweisen.

2. Verfahren nach Anspruch 1, umfassend Empfangen der Mitteilung gemäß einem Protokoll zum Aktualisieren von Programmanweisungen.

3. Verfahren nach Anspruch 1 oder Anspruch 2, wobei den Deaktivierungsdaten mindestens ein Abschnitt der Programmanweisungen für die mindestens eine Funktionalität zugewiesen ist, wobei das Verfahren Aktualisieren des Abschnitts mit den Deaktivierungsdaten umfasst.

4. Verfahren nach Anspruch 1 oder Anspruch 2, wobei die Deaktivierungsdaten Löschanweisungen zum Löschen mindestens eines Abschnitts der Programmanweisungen umfassen, wobei das Verfahren Löschen des Abschnitts beim Ausführen der Löschanweisungen umfasst.

5. Verfahren nach Anspruch 1 oder Anspruch 2, wobei die Deaktivierungsdaten Programmanweisungen für eine Funktionalität enthalten und wobei der Schritt zum Verändern Ersetzen mindestens eines Abschnitts der Programmanweisungen mit den in den Deaktivierungsdaten enthaltenen Programmanweisungen umfasst.

6. Verfahren nach Anspruch 5, wobei die Programmanweisungen der Deaktivierungsdaten Anweisungen für eine Trackingfunktionalität sind, und wobei das Verfahren Erzeugen einer geographischen Position des Mobilgeräts (1) und Übermitteln der geographischen Position zu einer entfernten Vorrichtung beim Ausführen der Programmanweisungen für die Trackingfunktionalität umfasst.

7. Verfahren nach einem der vorhergehenden Ansprüche, wobei die Deaktivierungsdaten eine Wiederherstellungsautorisierung-Identitätsmarke umfassen, wobei das Verfahren Speichern der Wiederherstellungsauthorisierung-Identitätsmarke in einem Speicher (130) umfasst.

8. Verfahren nach Anspruch 7, umfassend Lesen der Wiederherstellungsauthorisierung-Identitätsmarke bei einem Versuch, eine zuvor deaktivierte Funktionalität wiederherzustellen.

9. Mobilgerät (1) umfassend
einen Speicher (130) mit Programmanweisungen für mindestens eine Funktionalität,
einen Empfänger (100) zum Empfangen einer Mitteilung von einer entfernten Kommunikationsvorrichtung (20), wobei die Mitteilung Deaktivierungsdaten zum Deaktivieren der mindestens einen Funktionalität umfasst,
**gekennzeichnet durch**,
eine Aktualisierungseinheit (120) zum Aktualisieren mindestens eines Abschnitts der Programmanweisungen auf Grundlage der Deaktivierungsdaten und zum Deaktivieren der Funktionalität **dadurch**, wobei die Deaktivierungsdaten Daten zum Verändern der Programmanweisungen und eine Wiederherstellungsauthorisierung-Identitätsmarke umfassen.

10. Mobilgerät nach Anspruch 9, wobei der Empfänger Mittel zum Empfangen der Mitteilung während des Betriebs gemäß einem Protokoll zum Aktualisieren von Programmanweisungen umfasst.

11. Mobilgerät nach Anspruch 9 oder Anspruch 10, wobei den Deaktivierungsdaten mindestens ein Abschnitt der Programmanweisungen für die mindestens eine Funktionalität zugewiesen ist.

12. Mobilgerät nach Anspruch 9 oder Anspruch 10, wobei die Deaktivierungsdaten Anweisungen zum Löschen mindestens eines Abschnitts der gespeicherten Programmanweisungen enthalten.

13. Mobilgerät nach Anspruch 9 oder Anspruch 10, wobei die Deaktivierungsdaten Programmanweisungen für eine Funktionalität enthalten, und wobei die Aktualisierungseinheit (120) ausgestaltet ist, um mindestens einen Abschnitt der Programmanweisungen für die mindestens eine Funktionalität mit den Programmanweisungen der Deaktivierungsdaten zu ersetzen.

14. Mobilgerät nach Anspruch 13, wobei die Programmanweisungen der Deaktivierungsdaten Programmanweisungen für eine Trackingsfunktionalität sind, und wobei das Mobilgerät eine Positionsbestimmungseinheit (140) zum Bestimmen der geographischen Position des Mobilgeräts (1) umfasst.

15. Mobilgerät nach einem der Ansprüche 9-14, wobei die Deaktivierungsdaten eine Wiederherstellungsauthorisierung-Identitätsmarke umfassen.

16. Mobilgerät nach einem der Ansprüche 9-15, umfassend einen Prozessor (110) zum Lesen der Wiederherstellungsauthorisierung-Identitätsmarke bei einem Versuch, eine deaktivierte Funktionalität wiederherzustellen.

17. Mobilgerät nach einem der Ansprüche 9-15, wobei das Mobilgerät ein tragbares Mobilfunk-Kommunikationsgerät, ein Mobilfunkendgerät, ein Mobiltelefon (1), ein Pager, ein Fernmelder, ein elektronischer Organizer, ein Smartphone, oder ein Fahrzeug, ein Schienenfahrzeug, Flugzeug oder ein Boot mit Kommunikationsfähigkeiten ist.

18. Verfahren zum entfernten Deaktivieren mindestens einer Funktionalität eines Mobilgeräts (1), welches Kommunikationsfähigkeiten und Programmanweisungen für die Funktionalität besitzt, umfassend
Erzeugen einer Mitteilung, welche die Aktivierungsdaten zum Deaktivieren mindestens einer Funktionalität des Mobilgeräts (1) umfasst;
**gekennzeichnet durch**
Übertragen der Mitteilung von einer Steuerzentrale (20) an das Mobilgerät, wobei die Deaktivierungsdaten Daten zum Deaktivieren mindestens eines Abschnitts der Programmanweisung und eine Wiederherstellungsauthorisierung-Identitätsmarke umfassen.

19. Verfahren nach Anspruch 18, umfassend Übertragen der Mitteilung gemäß einem Protokoll zum Aktualisieren von Programmanweisungen.

20. Verfahren nach Anspruch 18 oder Anspruch 19, umfassend Integrieren von Deaktivierungsdaten mit Programmanweisungen zum Löschen mindestens eines Abschnitts der Programmanweisungen in die Mitteilung.

21. Verfahren nach Anspruch 18 oder Anspruch 19, umfassend Integrieren von Deaktivierungsdaten mit Daten zum Ersetzen mindestens eines Abschnitts der Programmanweisungen für die mindestens eine Funktionalität in die Mitteilung.

22. Verfahren nach Anspruch 18 oder Anspruch 19, wobei die Deaktivierungsdaten Programmanweisungen zum Ersetzen mindestens eines Abschnitts der Programmanweisungen für die mindestens eine Funktionalität aufweisen.

23. Verfahren nach Anspruch 22, wobei die Deaktivierungsdaten Programmanweisungen für eine Trackingfunktionalität aufweisen.

24. Steuervorrichtung (20) zum entfernten Deaktivieren mindestens einer Funktionalität eines Mobilgeräts (1) mit Kommunikationsfähigkeiten und Programmanweisungen für die Funktionalität, umfassend
eine Steuerung (180) zum Erzeugen einer Mitteilung, welche Deaktivierungsdaten zum Deaktivieren mindestens einer Funktionalität des Mobilgeräts (1) aufweist; und
**gekennzeichnet durch**
eine Kommunikationseinheit (160) zum Übertragen der Mitteilung an das Mobilgeräts (1),
wobei die Deaktivierungsdaten Daten zum Deaktivieren mindestens eines Abschnitts der Programmanweisungen und eine Wiederherstellungsauthorisierung-Identitätsmarke aufweisen;
wobei die Steuerung (180) Mittel umfasst, um die Deaktivierungsdaten während des Betriebs in die Mitteilung zu integrieren.

25. Steuervorrichtung nach Anspruch 24, wobei die Kommunikationseinheit (160) ausgestaltet ist, um die Mitteilung gemäß einem Protokoll zur Aktualisierung von Programmanweisungen zu übertragen.

26. Steuervorrichtung nach Anspruch 24 oder Anspruch 25, wobei die Deaktivierungsdaten Programmanweisungen zum Löschen mindestens eines Abschnitts der Programmanweisungen für die mindestens eine Funktionalität aufweisen.

27. Steuervorrichtung nach Anspruch 24 oder Anspruch 25, wobei die Deaktivierungsdaten Daten zum Ersetzen mindestens eines Abschnitts der Programmanweisungen für die mindestens eine Funktionalität aufweisen.

28. Steuervorrichtung nach Anspruch 24 oder Anspruch 25, wobei die Deaktivierungsdaten Programmanweisungen zum Ersetzen mindestens eines Abschnitts der Programmanweisungen für die mindestens eine Funktionalität aufweisen.

29. Steuervorrichtung nach Anspruch 28, wobei die Deaktivierungsdaten Programmanweisungen für eine Trackingfunktionalität aufweisen.

30. Computerprogrammprodukt umfassend Computerprogrammcodemittel zum Ausführen des Verfahrens nach einem der Ansprüche 1-8, wenn die Computerprogrammcodemittel von einer elektronischen Vorrichtung mit Computerfähigkeiten ausgeführt werden.

31. Computerprogrammprodukt umfassend Computerprogrammcodemittel zum Ausführen des Verfahrens nach einem der Ansprüche 18-23, wenn die Computerprogrammcodemittel von einer elektronischen Vorrichtung mit Computerfähigkeiten ausgeführt werden.

## Revendications

1. Procédé destiné à inhiber au moins une fonctionnalité d'un dispositif mobile (1) possédant des capacités de communication et des instructions de programme pour ladite fonctionnalité, comprenant l'étape consistant à :
recevoir un message d'un dispositif de communication distant (20) à l'aide du dispositif mobile (1), ledit message comprenant des données d'inhibition destinées à inhiber ladite au moins une fonctionnalité ;
**caractérisé par** l'étape consistant à :
modifier au moins une partie desdites instructions de programme pour ladite au moins une fonctionnalité, en fonction desdites données d'inhibition, et de ce fait inhiber ladite fonctionnalité, les données d'inhibition comprenant des données destinées à modifier lesdites instructions de programme pour ladite au moins une fonctionnalité, ainsi qu'une balise d'identité pour l'autorisation du rétablissement.

2. Procédé selon la revendication 1, comprenant en outre l'étape consistant à recevoir le message selon un protocole destiné à mettre à jour des instructions de programme.

3. Procédé selon la revendication 1 ou 2, dans lequel les données d'inhibition sont associées à au moins une partie des instructions de programme pour ladite au moins une fonctionnalité, le procédé comprenant l'étape consistant à mettre à jour ladite partie à l'aide desdites données d'inhibition.

4. Procédé selon la revendication 1 ou 2, dans lequel les données d'inhibition comprennent des instructions de suppression destinées à supprimer au moins une partie des instructions de programme, le procédé comprenant l'étape consistant à supprimer ladite partie en réponse à l'exécution desdites instructions de suppression.

5. Procédé selon la revendication 1 ou 2, dans lequel les données d'inhibition comprennent des instructions de programme destinées à une fonctionnalité et l'étape de modification comprend l'étape consistant à remplacer au moins une partie desdites instructions de programme par les instructions de programme contenues dans les données d'inhibition.

6. Procédé selon la revendication 5, dans lequel les instructions de programme des données d'inhibition sont des instructions destinées à une fonctionnalité de suivi et le procédé comprend les étapes consistant à produire une position géographique du dispositif mobile (1) et à transmettre ladite position géographique vers un dispositif distant en réponse à l'exécution desdites instructions de programme destinées à ladite fonctionnalité de suivi.

7. Procédé selon l'une quelconque des revendications précédentes, dans lequel les données d'inhibition comprennent une balise d'identité pour l'autorisation du rétablissement, le procédé comprenant l'étape consistant à stocker la balise d'identité pour l'autorisation du rétablissement dans une mémoire (130).

8. Procédé selon la revendication 7, comprenant l'étape consistant à lire la balise d'identité pour l'autorisation du rétablissement en réponse à une tentative de rétablissement d'une fonctionnalité inhibée auparavant.

9. Dispositif mobile (1) comprenant :
une mémoire (130) comportant des instructions de programme pour au moins une fonctionnalité ;
un récepteur (100) destiné à recevoir un message d'un dispositif de communication distant (20), ledit message comprenant des données d'inhibition destinées à inhiber ladite au moins une fonctionnalité ;
**caractérisé par** :
une unité de mise à jour (120), destinée à mettre à jour au moins une partie des instructions de programme, en fonction des données d'inhibition, et de ce fait à inhiber ladite fonctionnalité, les données d'inhibition comprenant des données destinées à modifier lesdites instructions de programme, ainsi qu'une balise d'identité pour l'autorisation du rétablissement.

10. Dispositif mobile selon la revendication 9, dans lequel le récepteur comprend un moyen destiné, en service, à recevoir le message conformément à un protocole de mise à jour des instructions de programme.

11. Dispositif mobile selon la revendication 9 ou 10, dans lequel les données d'inhibition sont associées à au moins une partie des instructions de programme destinées à ladite au moins une fonctionnalité.

12. Dispositif mobile selon la revendication 9 ou 10, dans lequel les données d'inhibition comprennent des instructions destinées à supprimer au moins une partie des instructions de programme en mémoire.

13. Dispositif mobile selon la revendication 9 ou 10, dans lequel les données d'inhibition comprennent des instructions de programme destinées à une fonctionnalité et l'unité de mise à jour (120) est configurée pour remplacer au moins une partie des instructions de programme destinées à ladite au moins une fonctionnalité par les instructions de programme contenues dans les données d'inhibition.

14. Dispositif mobile selon la revendication 13, dans lequel les instructions de programme des données d'inhibition sont des instructions de programme destinées à une fonctionnalité de suivi et le dispositif mobile comprend une unité de détermination de la position (140) destinée à déterminer la position géographique du dispositif mobile (1).

15. Dispositif mobile selon l'une quelconque des revendications 9 à 14, dans lequel les données d'inhibition contiennent une balise d'identité pour l'autorisation du rétablissement.

16. Dispositif mobile selon l'une quelconque des revendications 9 à 15, comprenant un processeur (110) destiné à lire la balise d'identité pour l'autorisation du rétablissement en réponse à une tentative de rétablissement d'une fonctionnalité inhibée.

17. Dispositif mobile selon l'une quelconque des revendications 9 à 15, dans lequel le dispositif mobile est un équipement de radiocommunication mobile portatif, un terminal radio mobile, un téléphone mobile (1), un boîtier de recherche de personnes, un communicateur, un organisateur électronique, un téléphone intelligent, ou un véhicule, un véhicule ferroviaire, un aéronef ou un bateau ayant des capacités de communication.

18. Procédé destiné à inhiber à distance au moins une fonctionnalité d'un dispositif mobile (1) possédant des capacités de communication et des instructions de programme destinées à ladite fonctionnalité, comprenant l'étape consistant à :
produire un message contenant des données d'inhibition destinées à inhiber au moins une fonctionnalité du dispositif mobile (1) ;
**caractérisé par** l'étape consistant à :
émettre le message vers le dispositif mobile, à partir d'un centre de commande (20), les données d'inhibition comprenant des données destinées à inhiber au moins une partie des instructions de programme, ainsi qu'une balise d'identité pour l'autorisation du rétablissement.

19. Procédé selon la revendication 18, comprenant l'étape consistant à transmettre le message selon un protocole destiné à la mise à jour d'instructions de programme.

20. Procédé selon la revendication 18 ou 19, comprenant l'étape consistant à intégrer dans le message des données d'inhibition comprenant des instructions de programme destinées à supprimer au moins une partie des instructions de programme.

21. Procédé selon la revendication 18 ou 19, comprenant l'étape consistant à intégrer dans le message des données d'inhibition destinées à remplacer au moins une partie des instructions de programme pour ladite au moins une fonctionnalité.

22. Procédé selon la revendication 18 ou 19, dans lequel les données d'inhibition comprennent des instructions de programme destinées à remplacer au moins une partie des instructions de programme pour ladite au moins une fonctionnalité.

23. Procédé selon la revendication 22, dans lequel les données d'inhibition comprennent des instructions de programme pour une fonctionnalité de suivi.

24. Dispositif de commande (20) destiné à inhiber à distance au moins une fonctionnalité d'un dispositif mobile (1) possédant des capacités de communication et des instructions de programme destinées à ladite fonctionnalité, comprenant :
un contrôleur (180) destiné à produire un message contenant des données d'inhibition destinées à inhiber au moins une fonctionnalité du dispositif mobile (1) ; et
**caractérisé par** :
une unité de communication (160) destinée à émettre le message vers le dispositif mobile (1) ;
dans lequel les données d'inhibition comprennent des données destinées à inhiber au moins une partie des instructions de programme, ainsi qu'une balise d'identité pour l'autorisation du rétablissement ; et
le contrôleur (180) comprend un moyen qui, en service, est destiné à intégrer les données d'inhibition dans le message.

25. Dispositif de commande selon la revendication 24, dans lequel l'unité de communication (160) est configurée pour transmettre le message à l'aide d'un protocole destiné à la mise à jour d'instructions de programme.

26. Dispositif de commande selon la revendication 24 ou 25, dans lequel les données d'inhibition comprennent des instructions de programme destinées à supprimer au moins une partie des instructions de programme pour ladite au moins une fonctionnalité.

27. Dispositif de commande selon la revendication 23 ou 24, dans lequel les données d'inhibition comprennent des données destinées à remplacer au moins une partie des instructions de programme pour ladite au moins une fonctionnalité.

28. Dispositif de commande selon la revendication 24 ou 25, dans lequel les données d'inhibition comprennent des instructions de programme destinées à remplacer au moins une partie des instructions de programme pour ladite au moins une fonctionnalité.

29. Dispositif de commande selon la revendication 28, dans lequel les données d'inhibition comprennent des instructions de programme pour une fonctionnalité de suivi.

30. Progiciel d'ordinateur comprenant des moyens de code de programme d'ordinateur destinés à exécuter le procédé selon l'une quelconque des revendications 1 à 8 lorsque lesdits moyens de code de programme d'ordinateur sont exécutés par un dispositif électronique possédant des capacités d'ordinateur.

31. Progiciel d'ordinateur comprenant des moyens de code de programme d'ordinateur destinés à exécuter le procédé selon l'une quelconque des revendications 18 à 23 lorsque lesdits moyens de code de programme d'ordinateur sont exécutés par un dispositif électronique possédant des capacités d'ordinateur.
